# EUROPEAN PATENT APPLICATION

(11) **EP 2 290 575 A1**
(43) Date of publication of application: **02.03.2011**
(21) Application number: 10174454.8
(22) Date of filing: 30.08.2010
(51) Int. Cl.: G06F 21/00

(54) **IC Card comprising an improved processor**

(30) Priority: 31.08.2009 IT MI20091516
(71) Applicant: Incard SA, 1204 Geneva (CH)
(72) Inventor: Di Iorio, Paolo, 81020, San Nicola La Strada (Caserta) (IT)
(74) Representative: Botti, Mario

(57) **Abstract**

The present invention relates to an IC Card (10) comprising a processor (1) for processing instructions (5) and a memory (2) wherein at least a result (6) of the instructions (5) processed is stored. The IC Card (10) comprises an additional processor (3) for differently processing the instructions (5) and a comparator (7) for comparing a result (9) of the instructions (5) processed by the additional processor (3) with the at least a result (6) processed by the processor (1).

## Description

### Field of application

The present invention relates to an IC Card comprising a processor for processing instructions and a memory wherein a result of the processed instructions is stored.

More particularly, the present invention relates to an IC Card of the type described above and comprising means for detecting a security attack intended to modify the result of processed instructions, in order to access the IC Card.

The present invention further relates to a method to protect an IC Card comprising the steps of processing instructions with a processor of the IC Card and storing a result of the processed instructions in a memory of the IC Card.

### Prior art

As it is known, an IC Card comprises a processor for processing instructions and a memory wherein a result of the processed instructions is stored. The result of the processed instructions, as well as data stored in the memory, are protected from unauthorized access through security means, including an authentication program stored in the IC Card which receives in input a password or PIN to be verified and denies the access to the memory, if the password or PIN is not correct.

For example, the authentication program executes an "if" instruction, as schematically reported here below in a pseudo-code, which allows an access to the IC Card resources, including the memory, if the PIN is correct, or deny the access, otherwise

*If (PIN is correct) than access else deny,*
wherein a processing of the instruction or condition *If(PIN is correct)* results in a value 1, if the PIN is correct, or in a value 0, if the pin is not correct.

Security attacks modify the result of the authentication program, in order to access the IC Card resources and memory even if the PIN in input is not correct.

More particularly, security attacks comprise injecting a fault in the IC Card, which is for example an unexpected value of current or frequency, as instance a glitch on a power line of the IC Card or a clock frequency, wherein such value is not compliant with an ISO 7816 standard specification of the IC Card and cause an unexpected response of the IC Card.

More particularly, the fault injection may cause a modification of the result of the processed instructions. For example, the result of the authentication program is modified so that the processing of the instruction or condition *If(PIN is correct)* results in the value 0, if the PIN is correct, or in the value 1, otherwise, substantially inverting the expected value of the result to be processed.

In order to detect security attacks, the prior art IC Card is programmed to process more than one time the same instructions, to compare corresponding results and deny and access to the IC Card resources, if such results are different.

Such IC Card detects at least some security attacks, for example attacks which are executed randomly, i.e. injecting different values of current or frequency during the more than one processing, causing the processing of different results on the same instructions.

However, the IC Card above described is substantially ineffective to detect a wide range of more sophisticated security attacks, for example when the results of the more than one processing of the same instructions are the same because also the faults injected during such processing are the same. In this case, a comparison of the results does not detect the security attack.

Moreover, the fault may be injected while data to be processed are transferred from the memory of the IC Card to the registers of the processor, or vice versa, and not during processing. For clarity a simple example of transfer of data to be processed from the memory to the register is here below given.

The processor reads data to be processed with a predetermined value 1 from the memory, a fault is injected during the transmission of the value 1 on a bus connecting the processor and the memory, so that the value 1 is inverted to 0 and thereafter stored in the register. The processor executes twice the instructions on the value 0, in order to detect security attacks during the processing. No fault are injected during the processing of instructions and a same result X is processed. Thus, the IC Card does not detect the security attach, even if the value 1 has been corrupted from a fault injection during the transmission on the bus.

The problem at the basis of the present invention is that of providing an IC Card for detecting sophisticated security attacks which are executed injecting a fault, for example a same value of current or frequency, not only during the processing of instructions in the IC Card processor but also during a transfer of a result of the instructions from the processor to the IC Card memory or during the transfer of data to be processed from the memory to the processor, locking an access to the IC Card resources when the security attack is detected, and overcoming the limitations and drawbacks that currently affects the IC Card according to the prior art.

### Summary of invention

The solution idea at the base of the present invention is that of modifying the hardware of an IC Card introducing an additional processor for processing instructions in a different manner with respect to instruction processed by a main processor already incorporated into the IC Card and comparing the results of both processors, in order to detect security attacks.

For example, the instructions are processed differently by each processor because a delay between the clocks of the processors is programmed, or because the processors are programmed with a different logic, i.e. with different clock frequencies or different hardware components, which react differently to fault injections like value of current or frequency.

Advantageously, a sophisticated security attack, for example a same value of current or frequency or a fault injection during a transfer of data from a memory of the IC Card to the processors, or vice versa, is detected, since the effect produced by the security attack on the two processors is different and thus result returned by the processor is also different.

In an aspect of the present invention, the IC Card comprises a first set of instructions programmed to return a result to be processed by the main processor, and a second set of instructions, different from the first set and programmed to return the same result, to be processed by the additional processor. Advantageously, the two set of instructions involve different computations in the respective processors and thus, if a same or a different fault is injected during the processing, the results returned by the processors are different.

In another aspect of the present invention, the main processor and the additional processor process a same set of instructions but are activated with a predetermined delay or have different clock frequency.

In a further aspect of the present invention, the main processor and the additional processor are programmed according to a different logic. Advantageosuly, the effect of the fault injected during the processing of the main processor is different with respect to the effect of the fault injected during the processing of the additional processor, since the logic programmed for the two processors provide to execute the instructions differently.

More particularly, the fault injection during a transfer of data from the memory to the main processor and to the additional processor is detected due to a different effect produced by the fault injection during the transfer of such data on the bus connecting the respective processors, causing a difference in the data stored in the corresponding registers.

According to the solution idea given above, the technical problem is solved by an IC Card comprising a processor for processing instructions and a memory wherein at least a result of the processed instructions is stored, characterized by comprising an additional processor for differently processing instructions and a comparator for comparing a result of the instructions differently processed by the additional processor with respect to said at least a result processed by the processor.

According to the solution idea given above, the technical problem is also solved by a method to protect an IC Card comprising the steps of processing instructions with a processor of the IC Card and storing at least a result of the processed instructions in a memory of the IC Card, characterized by comprising the steps of differently processing the instructions with an additional processor of the IC Card and comparing a result of the processed instructions by the additional processor with said at least a result processed by the processor, with a comparator of the IC Card.

Further technical features and advantages according to the IC Card and the method of the present invention will be apparent form the description given here below only for exemplificative purpose and without limiting the scope of protection of the present invention.

### Brief description of the drawings

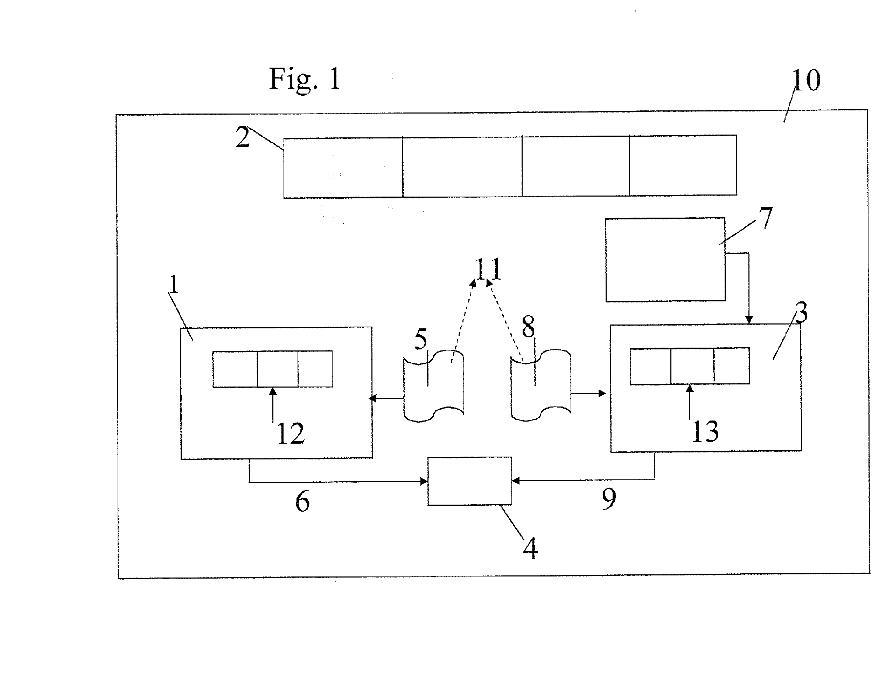

Figure 1 schematically represents an IC Card according to the present invention.

### Detailed description

With reference to figure 1 it is schematically represented with numeral reference 10 an IC Card according to the present invention, comprising a main processor or processor 1 for processing instructions 5 and a memory 2 wherein a result 6 of the instructions 5 processed is stored.

For example, the instructions comprise an authentication program stored in the IC Card 10 which receives in input a password or PIN to be verified and denies the access to the memory 2, if the password or PIN is not correct. More particularly, the authentication program executes an "if" instruction of the type

*If (PIN is correct) than access else deny,*
which denies the access to the IC Card resources, if the PIN is not correct, i.e. if a processing of the instruction or condition 5 *"If(PIN is correct)"* results in a value 0.

The processor 1 comprises registers 12 wherein data to be processed are loaded from the memory 2 and wherefrom processed data, including the result 6 of the instruction 5 are read, to be transmitted and stored in the memory 2. The memory 2 further stores sensible data to be protected from unauthorized access.

According to the present invention, the IC Card 10 comprises an additional processor 3 for processing the instructions 5 differently with respect to the instruction processed by the processor 1 and a comparator 7 for comparing a result 9 of the instructions 5 processed by the additional processor 3 with the result 6 of the instruction 5 processed by the processor 1.

In a first aspect of the present invention, the additional processor 3 is activated to process the instructions 5, for example authentication instructions 5, with a predetermined delay with respect to an activation of the processor 1, i.e. the instruction 5 are processed in different time intervals. Thus, a security attack executed at a predetermined time t1, during which the processor 1 process the instruction 5, does not involve the processing of the same instruction 5 with the additional processor 3.

More particularly, security attacks comprise injecting a fault in the IC Card, which is for example an unexpected value of current or frequency, as instance a glitch on a power line of the IC Card or a clock frequency, wherein such value is not compliant with an ISO 7816 standard specification of the IC Card and cause an unexpected response of the IC Card.

According to the present invention, if the glitch is injected on the power line of the processor 1 and not on the power line of the additional processor 3, the results of the instructions 5 respectively processes are different and thus the security attack is detected.

In another aspect of the invention, the additional processor 3 is programmed with a different logic with respect to the processor 1. Preferably, the processor 1 and the additional processor are separate and different chips, including respective clocks and registers, and connected with respective input/output ports to the memory 2.

A same fault injected during the execution of the same instructions 5 by the part of the processor 1 and the additional processor 3, for example a same value of current or frequency not complying with the ISO 7816 standard, is processed differently, because the hardware of the processor 1 and the additional processor 5 is different and the input/output ports connections between the memory 2 and the processors are differently hard wired.

With reference to the example given above, if an out of standard value of current is supplied to the processor 1 when the instruction 5 *"If (PIN is correct)"* is processed, the processor 1 returns an incorrect result, for example the value 0 even if the PIN is correct. However, if the same out of standard value of current is supplied to the processor 3 when the same instruction 5 *"If (PIN is correct)"* is processed, the processor 3 returns a result which is different from the incorrect result provided by the processor 1, for example the value 1.

Advantageosuly, the same fault injected at the same time t1 or at different time t1, t2 during which the processor 1 and the additional processor 3 execute the instructions 5 does not produce the same effect on the respective results 6, 9, which are compared to successfully detect the security attack.

In a first embodiment of the present invention, not all the instructions 5 are processed twice. More particularly, predetermined instructions, as instance the instructions including the authentication program or involving security operations, for example banking transactions or operations reading secure data of the memory 2, may be programmed to be processed from both the processors 1, 3. The other instructions are not processed twice and the additional processor 3 is used to increase performance, i.e. reducing the computational load on the processor 1.

In a preferred embodiment of the invention, the IC Card 10 comprises a detector 4 of fault injections which activates the additional processor 3 when the fault injections are detected. Advantageosuly, a double processing of the instructions 5 is activated only when a security attack is likely to be executed.

In another aspect of the present invention, the IC Card 10 stores additional instructions 8 programmed to result in a same result 11 for which the instructions 5 are programmed. For example, with reference to the example given above, the instruction 5 *"If (PIN is correct)",* which is programmed to return the value 1 if the PIN is correct or the value 0 if the PIN is not correct, is also programmed as instruction 8 "not *(If (PIN is not correct))",* i.e. returning the same values 1, if the PIN is correct, or 0 if the PIN is not correct. The processor 1 process the instructions 5 and the additional processor 3 process the additional instructions 8, and the comparator 7 compares the result 9 of the additional instructions 8 of the additional processor 3 with the result 6 of the instructions 5 of the processor 1.

Advantageously, a fault injected during the execution of the instructions 5 and 8 produces a different effect on the respective processors 1 and 3, since the instructions 5 and 8 are different, i.e. the instruction 5 comprises only an evaluation on the condition *PIN is correct,* while the instruction 8 comprises a first evaluation of the condition *"PIN is not correct",* returning a first result 1 or 0, and a second evaluation of the condition *"not (1)" or "not (0)"*, depending on the first result.

More particularly, a second set of instructions to be processed from the additional processor 2 may be programmed to verify the result provided by the processor 1 after the execution of a first set of instructions, wherein the number of the instructions of the first and the second set may be different. Thus, advantageously, the faults injected during the execution of the first set of instructions produces different effects with respect to faults injected during the execution of the second set of instructions, and the results processed by the processors are different.

As will be apparent from the following description, the IC Card 10 according to the present invention detects also the security attacks executed during the transmission of data between the memory 2 and the registers 12, 13 of the processors 1, 3.

The registers 12 and 13 are memory portions of the IC Card wherein data to be processed by processors 1, 3 are loaded or wherefrom the results 6, 9 of the instructions 5, 8 processed by such processors 1, 3 is read, to be transmitted and stored in the memory 2. More particularly, the memory 2 comprises a memory portion wherein the result 6 processed by the processor 1 is stored and wherefrom data to be processed are transmitted to the processor 1 and the additional processor 3.

In order to detect a fault injected when the result 6 processes by the processor 1 is transmitted or stored in the memory 2, the comparator of the IC Card 10 compares the result 6 stored in the memory 2 by the processor 1 with the result 9 stored in the respective register 13 by the additional register 3.

On the contrary, in order to detect a fault injected when the data to be processed are transmitted from the memory 2 to the corresponding registers 12, 13 of the processor 1 and the additional processor 3, the comparator 4 of the IC Card 10 compares data stored in the register 12 of the processor 1 and data stored in the register 13 of the additional processor 3.

More particularly, the comparator 4 locks an access to the IC Card 10 resources if the result 9 of the instructions 5 processed by the additional processor 3 is different from the result 6 processed by the processor 1.

The present invention further relates to a method for protecting an IC Card 10 comprising the steps of processing instructions 5 with a processor 1 of the IC Card 10 and storing a result 6 of the instructions 5 processed in a memory 2 of the IC Card 10.

According to the method of the invention, the instructions 5 are differently processed with an additional processor 3 of the IC Card 10 and a corresponding result 9 of the instructions 5 differently processed by the additional processor 3 is compared with the result 6 processed by the processor 1, with an comparator 7 of the IC Card 10.

Preferably, the method comprises a step of detecting fault injections in the IC Card 10 with a detector 4, activating the additional processor 3 only if the fault injections are detected, and executing the additional processor 3 as a support to the computational load in charge on the processor 1, if the fault injection is unfeasible.

According to an aspect of the invention, the additional processor 3 is activated to process the instructions 5 with a predetermined delay with respect to an activation of the processor 1.

According to a preferred embodiment, the method comprises the step of storing in the IC Card 10 additional instructions 8 programmed to result in a same result 11 for which the instructions 5 are programmed, and the steps of processing the instructions 5 with processor 1 and the additional instructions 8 with the additional processor 3. The results 9 of the additional instructions 8 is compared with the result 6 of the instructions 5, with said comparator 7 and the access to the resources of the IC Card is denied, if the result 6 and 11 are different.

Advantageosuly, the IC Card and method according to the present invention detect sophisticated security attacks, for example a same value of current or frequency injected during a transfer of data from a memory of the IC Card to the processors, or vice versa, since the effect produced by such attacks on the two processors is different and the results returned by the processors, to be compared, are also different.

Advantageosuly, the different logic used for programming the two processors provides to detect sophisticated security attacks, since the faults injected have different effects on the programmed logic and the results returned by the processors are different.

Advantageosuly, the IC Card and method detect the same faults injected at the same time t1 or at different time t1, t2 during which the processor 1 and the additional processor 3 execute the instructions 5, since same faults does not produce same effects on the processor 1 and the additional processor 3. Moreover, the hardware of the two processors and the bus connections with the memory are different, so that the injections of fault have different electrical effects on such processor and connections.

Advantageosuly, a double processing of the instructions 5 is activated only when a security attack is likely to be executed and the additional processor 3 may be used to unload the computational charge of the processor 1, when security checks are not required.

## Claims

1. IC Card (10) comprising a processor (1) for processing instructions (5) and a memory (2) wherein at least a result (6) of the processing phase of said instructions (5) is stored, **characterized by** comprising an additional processor (3) for differently processing said instructions (5) and a comparator (7) for comparing a result (9) of the instructions (5) processed by the additional processor (3) with said at least a result (6) processed by said processor (1).

2. IC Card (10) according to claim 1, **characterized by** comprising a detector (4) of fault injections in said IC Card (10), said detector (4) activating said additional processor (3) when said fault injections are detected.

3. IC Card (10) according to claim 2, **characterized by** the fact that said detector (4) activates said additional processor (3) to process the instructions (5) with a predetermined delay with respect to an activation of said processor (1).

4. IC Card (10) according to claim 1, **characterized by** the fact that said additional processor (3) is programmed with a different logic with respect to said processor (1).

5. IC Card (10) according to one of the previous claims, **characterized by** the fact that said IC Card (10) stores additional instructions (8) programmed to result in a same result (11) for which said instructions (5) are programmed, wherein said processor (1) process said instructions (5) and said additional processor (3) process said additional instructions (8), and said comparator (7) compares the result (9) of the additional instructions (8) processed by said additional processor (3) with the result (6) of the instructions (5) processed by said processor (1).

6. IC Card (10) according to claim 5, **characterized by** the fact that said memory (2) comprises respective registers (12, 13) of said processor (1) and said additional processor (3), storing the results (6, 9) of the corresponding instructions (5, 8) processed.

7. IC Card (10) according to claim 6, **characterized by** the fact that said memory (2) comprises a memory portion of said IC Card (10) wherein said result (6) processed by said processor (1) is stored and wherefrom data to be processed are transmitted to said processor (1) and said additional processor (3).

8. IC Card (10) according to claim 6, wherein said comparator (4) compares the result (6) stored in said memory (2) by said processor (1) with the result (9) stored in the respective register (13) by said additional register (13), in order to detect a fault injected when the result (6) processes by said processor (1) is transmitted or stored in said memory (2).

9. IC Card (10) according to claim 1, wherein said comparator (4) compares data stored in the register (12) of said processor (1) and data stored in the register (13) of said additional processor (3), in order to detect a fault injected when said data to be processed are transmitted from said memory (2) to the corresponding registers (12, 13) of said processor (1) and said additional processor (3).

10. IC Card (10) according to one of the previous claim 1, wherein said comparator (4) locks an access to said IC Card (10) if the result (9) of the instructions (5) processed by said additional processor (3) is different from the result (6) processed by said processor (1).

11. Method to protect an IC Card (10) comprising the steps of processing instructions (5) with a processor (1) of said IC Card (10) and storing at least a result (6) of the processing phase of said instructions (5) in a memory (2) of said IC Card (10), **characterized by** comprising the steps of differently processing said instructions (5) with an additional processor (3) of said IC Card (10) and comparing a result (9) of the instructions (5) processed by the additional processor (3) with said at least a result (6) processed by said processor (1), with an comparator (7) of said IC Card (10).

12. Method according to claim 11, **characterized by** detecting fault injections in said IC Card (10) with a detector (4), and activating the additional processor (3) if said fault injections are detected.

13. Method according to claim 12, **characterized by** activating the additional processor (3) to process the instructions (5) with a predetermined delay with respect to an activation of said processor (1).

14. Method according to one of the claims 11-13, **characterized by** comprising the step of storing in said IC Card (10) additional instructions (8) programmed to result in a same result (11) for which said instructions (5) are programmed, the steps of processing said instructions (5) with processor (1) and said additional instructions (8) with said additional processor (3), and the step of comparing the result (9) of the additional instructions (8) with the result (6) of the instructions (5), with said comparator (7).

15. Method according to claim 14, **characterized by** comprising the step of storing the results (6, 9) of the corresponding instructions (5, 8) in said respective registers (12, 13) of said processor (1) and said additional processor (3).
